# FASCICULE DE BREVET EUROPEEN

(11) **EP 1 350 040 B1**
(45) Date de publication et mention de la délivrance du brevet: **03.12.2008**
(21) Numéro de dépôt: 01998746.0
(22) Date de dépôt: 26.11.2001
(51) Int. Cl.: F16D 65/18

(54) **CYLINDRE DE FREIN A DISQUE AVEC MECANISME DE FREIN DE PARC**
SCHEIBENBREMSENZYLINDER MIT FESTSTELLBREMSMECHANISMUS
DISC BRAKE CYLINDER WITH PARKING BRAKE MECHANISM

(30) Priorité: 28.11.2000 FR 0015463
(43) Date de publication de la demande: 08.10.2003
(73) Titulaire: ROBERT BOSCH GMBH, 70469 Stuttgart (DE)
(72) Inventeur: BOISSEAU, Jean-Pierre, F-75014 PARIS (FR)
(74) Mandataire: Hurwic, Aleksander Wiktor
(86) Numéro de dépôt international: PCT/FR2001/003717
(87) Numéro de publication internationale: WO 2002/044581

(56) Documents cités:
- EP-A- 0 209 271
- US-A- 4 176 733

## Description

La présente invention a pour objet un cylindre de frein à disque avec mécanisme de frein de parc et un frein à disque comportant un tel cylindre.

On sait que les freins à disque qui sont montés sur les roues arrière des véhicules remplissent les fonctions de frein de roulement, qui est leur destination principale, et de frein de parc ou frein de stationnement.

A cet effet, les cylindres des freins comportent un mécanisme intérieur de frein de parc qui s'actionne par traction d'un câble.

Un exemple connu d'un tel mécanisme est celui dans lequel le câble aboutit à un levier qui entraîne un arbre en rotation. Cet arbre est solidaire de l'un de deux plateaux circulaires qui se font face et emprisonnent entre eux des billes de métal logées dans des gorges pour former une rampe à billes. Lorsque le plateau solidaire de l'arbre, désigné plateau d'entrée, tourne par rapport au deuxième plateau, mobile en translation et couramment désigné plateau mobile, les billes roulent dans leurs gorges, d'abord au fond de celles-ci, puis en remontant sur des zones d'échappement bordant lesdites gorges. En roulant d'abord sur les fonds des gorges, les billes commencent par rattraper les jeux du mécanisme de frein de parc. En roulant ensuite sur les zones d'échappement, les rampes à billes écartent les deux plateaux l'un par rapport à l'autre.

Par un empilement de pièces, ce mouvement relatif des deux plateaux entraîne le serrage des mâchoires du frein autour du disque.

Ce mécanisme de frein de parc donne satisfaction quant à son fonctionnement.

Toutefois, les inventeurs à la base de la présente invention ont remarqué que lors de la phase de roulement des billes sur les fonds des gorges, le déplacement en translation du plateau mobile est souvent insuffisant pour rattraper complètement les jeux du mécanisme de frein de parc.

Par conséquent, le rattrapage de ce jeu s'achève alors que les billes roulent déjà sur leurs zones d'échappement.

Lorsque le jeu est complètement compensé, il ne reste donc qu'une faible course de déplacement en translation du plateau mobile pour assurer le serrage effectif des mâchoires sur le disque.

Ce problème est d'autant plus préoccupant que l'utilisateur du véhicule a tendance à limiter de lui-même son effort sur le levier d'actionnement du frein de parc, lorsqu'il lui a fait parcourir une certaine course.

Ainsi, si l'utilisateur consacre sans le savoir, une grande partie de la course du levier d'actionnement à rattraper les jeux mécaniques du mécanisme de frein de parc, il ne fournira pas un effort suffisant pour achever complètement le serrage du frein de parc.

La présente invention vise à fournir une solution simple et économique au problème exposé ci-dessus.

La présente invention a pour objet un cylindre de frein à disque comprenant un piston apte à se déplacer axialement en direction d'un disque et renfermant un mécanisme de frein de parc constitué par :
- un arbre d'entrée prenant appui sur une butée axiale du cylindre s'opposant au déplacement dudit arbre en direction opposée au disque, ledit arbre étant susceptible d'être entraîné en rotation lors d'une commande du frein de parc.
- un mécanisme de rampes à billes comprenant au moins une première gorge portée par l'arbre d'entrée, au moins une seconde gorge en regard de la première gorge portée par un organe apte à pousser le piston en direction du disque et au moins une bille emprisonnée entre ces gorges, chaque gorge comportant une zone d'échappement sur laquelle lorsque l'arbre d'entrée tourne par rapport audit organe, la bille roule et, dans un premier temps, rattrape des jeux du mécanisme et, dans un second temps, déplace axialement ledit organe en direction du piston par rapport à l'arbre d'entrée,
caractérisé en ce que la zone d'échappement de la gorge présente un profil exclusivement convexe.

Le cylindre de frein à disque selon l'invention est avantageux en ce que la forme convexe de la zone d'échappement de la gorge permet à la bille de rattraper très rapidement les jeux existant dans le mécanisme de frein de parc.

Ainsi, l'effort fourni par un utilisateur sur un levier d'actionnement du frein de parc peut être consacré presque intégralement au serrage du frein de parc, sans accroissement de la course du levier d'actionnement du frein. En outre, le profil convexe de la zone d'échappement de la gorge est indiqué du fait que l'effort a fournir par l'utilisateur lors du rattrapage des jeux est relativement faible en comparaison avec l'effort nécessaire au serrage du frein. Par conséquent, lors du rattrapage des jeux, il n'est pas rédhibitoire de provoquer un déplacement axial important du plateau mobile pour une faible rotation du plateau d'entrée.

Le profil convexe de la zone d'échappement peut être, varié. Par exemple, il peut s'agir d'un arc de cercle prolongé par une droite ou d'une portion d'ellipse, ou encore d'une forme logarithmique, d'un polynôme ou d'une combinaison de coniques.

La présente invention a également pour objet un frein à disque, caractérisé en ce qu'il comprend un cylindre tel que décrit ci-dessus.

Dans le but de mieux faire comprendre l'invention, on va en décrire maintenant un mode de réalisation donné à titre d'exemple non limitatif, en référence au dessin annexé, dans lequel :
- la figure 1 est une vue en coupe d'un frein à disque selon un mode de réalisation de l'invention,
- la figure 2 est une section d'une gorge d'un plateau selon une surface cylindrique coaxiale audit plateau,
- la figure 3 est un graphe représentant le déplacement du plateau mobile en fonction de l'angle de rotation du plateau d'entrée.

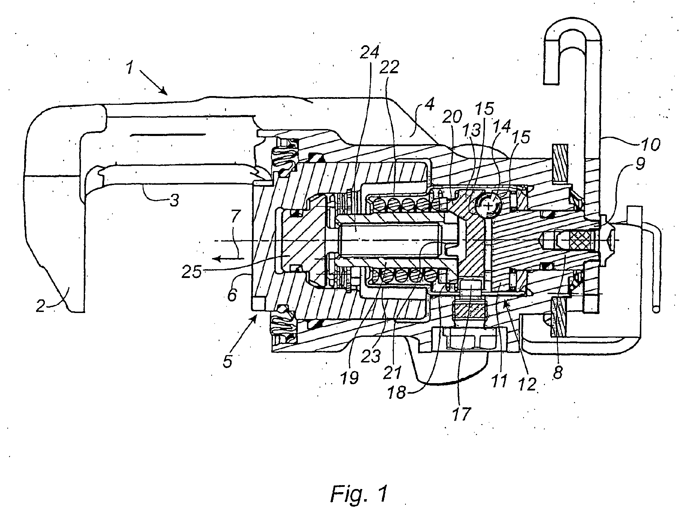

Le frein à disque représenté sur la figure 1 est constitué par un étrier 1 comprenant un nez d'étrier 2 relié par une voûte 3 à un cylindre 4.

Le cylindre loge un piston 5 qui est destiné à exercer, par sa face externe 6, une pression dirigée selon la flèche 7 sur une plaquette de frein (non représentée).

Une autre plaquette de frein (non représentée) est portée par le nez d'étrier 2 pour enfermer le disque (non représenté) de la roue entre les deux plaquettes.

Le cylindre 5 renferme les moyens d'actionnement permettant de serrer les plaquettes sur le disque, d'une part lorsqu'un utilisateur du véhicule enfonce la pédale de frein, d'autre part lorsque l'utilisateur actionne le frein de parc.

La commande à pédale met en oeuvre des moyens hydrauliques bien connus de l'homme du métier, qui ne seront pas détaillés dans la présente rescription.

Un mécanisme de frein de parc, également désigné frein à main, se combine aux moyens hydrauliques à l'intérieur du cylindre.

Ce mécanisme de frein de parc comprend un arbre d'entrée 8 dont une extrémité 9 fait saillie du cylindre à l'opposé du disque de frein. Par cette extrémité 9 en saillie, l'arbre d'entrée est solidaire en rotation d'un bras pivotant 10 qui est relié, par exemple par un câble (non représenté), au levier de commande du frein de parc situé dans l'habitacle du véhicule.

L'arbre d'entrée 8 se prolonge à l'intérieur du cylindre par un plateau d'entrée 11 d'une rampe à bille 12, elle-même constituée par ledit plateau d'entrée 11, un plateau mobile 13 et trois billes 14 intercalées entre les faces en regard des deux plateaux, à l'intérieur de gorges 15 en arcs de cercles centrées sur l'axe des plateaux prévues à cet effet.

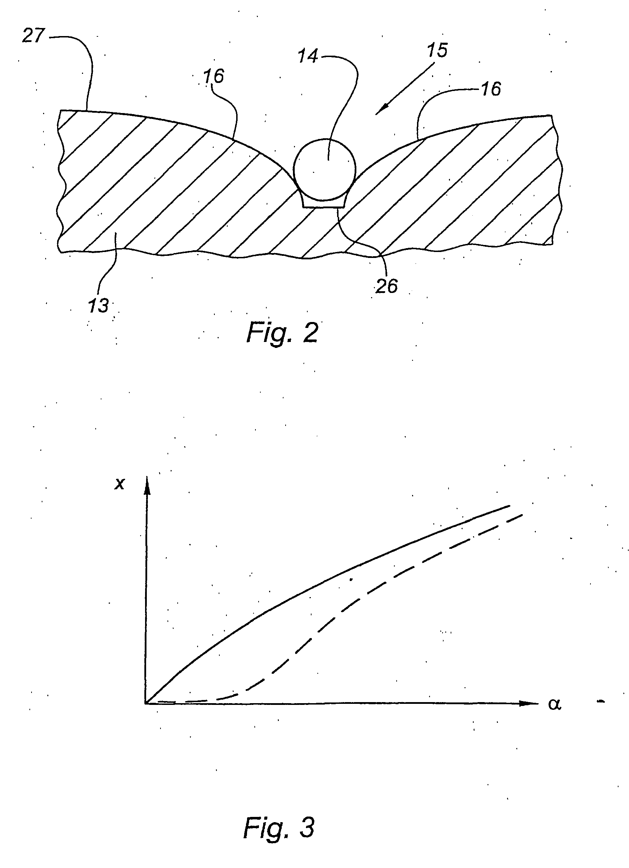

Comme on le voit à la figure 2, chaque gorge 15 est bordée par deux zones d'échappement 16 sur chacune desquelles la bille 14 correspondante roule lors d'une rotation du plateau d'entrée 11, le plateau mobile 13 étant maintenu fixe en rotation tout en étant libre en translation axiale.

Ainsi, lorsque le plateau d'entrée 11 tourne autour de l'axe de l'arbre d'entrée 8, le plateau mobile 13 est repoussé axialement en direction du piston 5.

Une vis de blocage 17 traverse la paroi externe du cylindre 4 pour déboucher à l'intérieur de ce dernier à hauteur du plateau mobile 13, lequel comporte une rainure 18 parallèle à son axe de translation, dans laquelle pénètre l'extrémité de la vis de blocage 17.

Le plateau mobile 13 est donc maintenu en rotation par la vis de blocage 17, mais demeure libre de se translater axialement à l'intérieur du cylindre.

Un manchon taraudé 19, également désigné écrou, s'appuie contre la face du plateau mobile 13 opposée au plateau d'entrée 11 et lui est solidaire en rotation grâce à des dents 20 du plateau mobile pénétrant dans des encoches 21 de l'écrou 19. Cet écrou est repoussé contre le plateau mobile 13 par un ressort hélicoïdal 22 enfermé dans une cloche 23 couvrant ledit ressort et la rampe à billes.

Une vis de réglage 24 est vissée dans l'écrou 19. Cette vis comporte une tête 25 en forme connue de poussoir apte, d'une part à exercer sur le piston 5 une force visant à le déplacer vers le disque de frein, d'autre part à solidariser la vis 24 en rotation avec le piston lorsqu'elle exerce cette force d'appui.

Le fonctionnement de ce mécanisme de frein dé parc est en soi connu. On en rappelle brièvement le principe : lorsque le bras 10 pivote, par exemple sous l'action d'un câble relié au levier de frein à main, l'arbre d'entrée 8, et donc le plateau d'entrée 11, pivotent également, et le plateau mobile 13 est repoussé en direction du disque de frein. L'écrou 19, ainsi repoussé, entraîne avec lui la vis 24 dont la tête 25 formant poussoir, immobilisée en rotation dans le piston 5, interdit toute rotation.

Par conséquent, la vis 24 ne peut pas se dévisser dans l'écrou 19 et le mouvement de translation imprimé à l'écrou 19 par le plateau mobile 13 se transmet à la vis 24 puis au piston 25, aux jeux fonctionnels près.

On va maintenant décrire la section de chaque gorge 15 de la rampe à billes de la figure 1.

Dans l'exemple décrit, la gorge 15 possède un fond plat 26 et deux zones d'échappement 16 de section logarithmique, reliant le fond plat 26 à la face frontale 27 du plateau.

Compte tenu de son diamètre, la bille 14 en fond de gorge ne repose pas sur le fond plat 26 mais sur la base inclinée des deux zones d'échappement 16. Cette position dite de fond de gorge, représentée à la figure 2, présente notamment l'avantage que la tangente au contact de fond de gorge de la bille est favorable à une bonne caractéristique de déplacement axial en fonction de la rotation du plateau, du fait que cette tangente n'est pas parallèle au plan de rotation des deux plateaux.

On élimine ainsi tout risque que la bille ne glisse au fond de la gorge sans rouler sur sa zone d'échappement, phénomène qui pourrait se produire si la tangente au contact de fond de gorge de la bille était parallèle au plan de rotation du plateau.

En outre, la forme logarithmique des zones d'échappement 16 engendre un déplacement axial x du plateau mobile 16, par rapport à l'angle α de rotation du plateau d'entrée 11, dont une représentation graphique est fournie par le graphe de la figure 3, sur lequel on voit que, dès le début de la rotation du plateau d'entrée, le plateau mobile se déplace assez fortement et que ce déplacement axial est de moins en moins croissant à mesure que la rotation du plateau d'entrée progresse.

L'invention assure ainsi un rattrapage des jeux et permet de consacrer l'essentiel de l'effort fourni par l'utilisateur au serrage du frein.

A titre de comparaison, on a représenté en trait interrompu la caractéristique de déplacement axial du plateau mobile par rapport à l'angle de rotation du plateau d'entrée, pour une rampe à billes de l'état de la technique, dans laquelle chaque gorge comporte un fond de profil circulaire prolongé par une zone d'échappement de profil sensiblement rectiligne.

Il apparaît clairement sur cette, caractéristique que l'essentiel de la course du levier de frein, qui correspond à l'angle α, est consommé par les premiers roulements de la bille en fond de gorge ou au voisinage de celui-ci.

Comme cela vient d'être expliqué, l'invention élimine cet inconvénient des dispositifs antérieurs.

L'invention n'est aucunement limitée par les exemples décrits ci-dessus.

La portée de la protection est définie par les revendications annexées.

## Revendications

1. Cylindre de frein à disque comprenant un piston (5) apte à se déplacer axialement en direction d'un disque et renfermant un mécanisme de frein de parc constitué par :
- un arbre d'entrée (8) prenant appui sur une butée axiale du cylindre s'opposant au déplacement dudit arbre en direction opposée au disque, ledit arbre étant susceptible d'être entraîné en rotation lors d'une commande du frein du parc.
- un mécanisme de rampes à bille, comprenant au moins une première gorge (15) portée par l'arbre d'entrée (8), au moins une seconde gorge (15) en regard de la première gorge, portée par un organe (13) apte à pousser le piston en direction du disque et au moins une bille (14) emprisonnée entre ces gorges, chaque gorge comportant une zone d'échappement (16) sur laquelle, lorsque l'arbre (8) d'entrée tourne par rapport audit organe, la bille roule, et dans un premier temps, rattrape des jeux du mécanisme et, dans un second temps, déplace axialement ledit organe (13) en direction du piston par rapport à l'arbre d'entrée,
**caractérisé en ce que** la zone d'échappement (16) de la gorge présente un profil exclusivement convexe.

2. Cylindre selon la revendication 1, **caractérisé en ce que** l'organe (13) est un plateau mobile d'une rampe à billes.

3. Cylindre selon l'une quelconque des revendications 1 et 2, **caractérisé en ce que** la zone d'échappement de la gorge a un profil logarithmique.

4. Cylindre selon l'une quelconque des revendications 1 et 2 **caractérisé en ce que** le profil de la zone d'échappement est un arc de cercle prolongé par une droite.

5. Cylindre selon l'une quelconque des revendications 1 et 2, **caractérisé en ce que** le profil de la zone d'échappement forme une portion d'ellipse.

6. Cylindre selon l'une quelconque des revendications 1 et 2, **caractérisé en ce que** le profil de la zone d'échappement forme une combinaison de coniques.

7. Frein à disque, **caractérisé en ce qu'**il comporte un cylindre selon l'une quelconque des revendications précédentes.

## Claims

1. Disk brake cylinder comprising a piston (5) capable of moving axially toward a disk and containing a parking brake mechanism consisting of:
- an input shaft (8) bearing against an axial stop of the cylinder preventing said shaft from moving in the opposite direction to the disk, said shaft being capable of being turned when the parking brake is operated,
- a ball-ramp mechanism, comprising at least a first groove (15) borne by the input shaft (8), at least a second groove (15) facing the first groove, borne by a member (13) capable of pushing the piston toward the disk and at least one ball (15) trapped between these grooves, each groove comprising an escapement zone (16) along which, when the input shaft (8) turns with respect to said member, the ball rolls and, initially, takes up the play in the mechanism and then moves said member (13) axially toward the piston with respect to the input shaft,
**characterized in that** the escapement zone (16) of the groove has an exclusively concave profile.

2. Cylinder according to Claim 1, **characterized in that** the member (13) is a moving plate of a ball ramp.

3. Cylinder according to either one of Claims 1 and 2, **characterized in that** the escapement zone of the groove has a logarithmic profile.

4. Cylinder according to either one of Claims 1 and 2, **characterized in that** the profile of the escapement zone is an arc of a circle extended by a straight line.

5. Cylinder according to either one of Claims 1 and 2, **characterized in that** the profile of the escapement zone forms a portion of an elipse.

6. Cylinder according to either one of Claims 1 and 2, **characterized in that** the profile of the escapement zone forms a combination of conical sections.

7. Disk brake, **characterized in that** it comprises a cylinder according to any one of the preceding claims.

## Patentansprüche

1. Scheibenbremszylinder mit einem Kolben (5), der sich axial zu einer Scheibe hin bewegen kann und einen Feststellbremsmechanismus umschließt, der durch Folgendes gebildet ist:
- eine Antriebswelle (8), die sich an einem axialen Anschlag des Zylinders abstützt, der der Verlagerung der Welle in eine zur Scheibe entgegengesetzte Richtung entgegenwirkt, wobei die Welle bei einer Betätigung der Feststellbremse in Drehung versetzt werden kann,
- einen Kugelrampenmechanismus, der mindestens eine in der Antriebswelle (8) ausgebildete erste Nut (15), mindestens eine zweite Nut (15), die der ersten Nut gegenüberliegt und in einem Element (13) ausgebildet ist, das den Kolben in Richtung Scheibe drücken kann, und mindestens eine zwischen diesen Nuten eingeschlossene Kugel (14) aufweist, wobei jede Nut einen Ausweichbereich (16) aufweist, auf dem die Kugel rollt, wenn sich die Antriebswelle (8) in Bezug auf das Element dreht, und zunächst Spiele des Mechanismus beseitigt und dann das Element (13) bezüglich der Antriebswelle axial in Richtung Kolben bewegt,
**dadurch gekennzeichnet, dass** der Ausweichbereich (16) der Nut ein ausschließlich konvexes Profil hat.

2. Zylinder nach Anspruch 1, **dadurch gekennzeichnet, dass** das Element (13) eine bewegliche Platte einer Kugelrampe ist.

3. Zylinder nach einem der Ansprüche 1 und 2, **dadurch gekennzeichnet, dass** der Ausweichbereich der Nut ein logarithmisches Profil hat.

4. Zylinder nach einem der Ansprüche 1 und 2, **dadurch gekennzeichnet, dass** das Profil des Ausweichbereichs ein durch eine Gerade verlängerter Kreisbogen ist.

5. Zylinder nach einem der Ansprüche 1 und 2, **dadurch gekennzeichnet, dass** das Profil des Ausweichbereichs einen Ellipsenabschnitt bildet.

6. Zylinder nach einem der Ansprüche 1 und 2, **dadurch gekennzeichnet, dass** das Profil des Ausweichbereichs eine Kombination von Kegeln bildet.

7. Scheibenbremse, **dadurch gekennzeichnet, dass** sie einen Zylinder nach einem der vorhergehenden Ansprüche aufweist.
